# EUROPEAN PATENT APPLICATION

(11) **EP 4 112 444 A1**
(43) Date of publication of application: **04.01.2023**
(21) Application number: 21182982.5
(22) Date of filing: 30.06.2021
(51) Int. Cl.: B64C 1/06, B64D 11/00

(54) **STRUCTURAL SYSTEM FOR AN AIRCRAFT FOR INSTALLATION OF EQUIPMENT**

(71) Applicant: Airbus Operations GmbH, 21129 Hamburg (DE)
(72) Inventor: GROSS, Claus-Peter, 21129 Hamburg (DE)
(74) Representative: LKGLOBAL Lorenz & Kopf PartG mbB Patentanwälte

(57) **Abstract**

A structural system (2, 36) for an aircraft (64) is proposed, comprising at least one circumferential stiffening frame (4, 38) for stiffening a fuselage (66) of the aircraft, the stiffening frame comprising a cross-sectional profile having a web (6) enclosed by a radial inner flange (8) and a radial outer flange (10), at least one elongate first fastening element (24), wherein the at least one stiffening frame comprises at least one first equipment attachment region (18), in which the web has a locally thickened attachment section (20) for receiving the first end (22) of the at least one first fastening element, and wherein in the first equipment attachment region, the inner flange comprises a cutout (26, 40) directly adjacent to the attachment section for passing through the at least one first fastening element to the attachment section.

## Description

### TECHNICAL FIELD

The invention relates to a structural system for an aircraft and an aircraft having a structural system and at least one piece of equipment attachable to the structural system.

### BACKGROUND OF THE INVENTION

In common aircraft design, circumferential stiffening frames as well as longitudinally arranged axial stiffening elements are provided to stiffen the outer skin of the aircraft fuselage. After connecting the skin, the stiffening frames, and the longitudinal stiffening elements to form a structure, fittings are attached to the stiffening frames and the stiffening elements to hold overhead stowage bins or the like. For this, often a laser beam aligned in the fuselage of the aircraft is used to manually align and drill drill holes for the fittings in a plurality of consecutive stiffening frames in order to provide an exact spatial alignment of the drill holes. The laser beam indicates an interface axis to the overhead stowage bins. While the drill holes are drilled, no other work is conducted inside the structure. Furthermore, this process is time-consuming.

### SUMMARY OF THE INVENTION

It is thus an object of the invention to propose a structural system for an aircraft that allows a faster attachment of pieces of equipment inside the aircraft structure, wherein the equipment is spatially alignable as exact as possible in the structure.

This object is met by the structural system for an aircraft according to the features of claim 1. Advantageous improvements and further embodiments may be gathered from the subclaims and the following description.

A structural system for an aircraft is proposed, comprising at least one circumferential stiffening frame for stiffening a fuselage of the aircraft, the stiffening frame comprising a cross-sectional profile having a web enclosed by a radial inner flange and a radial outer flange, at least one elongate first fastening element, wherein the at least one stiffening frame comprises at least one first equipment attachment region, in which the web has a locally thickened attachment section for receiving the first end of the at least one first fastening element, and wherein in the first equipment attachment region, the inner flange comprises a cutout directly adjacent to the attachment section for passing through the at least one first fastening element to the attachment section.

The at least one circumferential stiffening frame is based on common circumferential stiffening frames. It is conceivable that the structural system comprises a plurality of stiffening frames in a staggered manner along the longitudinal axis of an aircraft, while they extend perpendicularly to the longitudinal axis. The at least one circumferential may preferably comprise a circumferentially closed contour.

The at least one circumferential stiffening frame comprises a cross-sectional profile having a web that substantially extends in a radial direction, i.e. perpendicular to the longitudinal axis of the aircraft. At the inner delimitation of the web, the inner flange is arranged. Together with the web it may create a T-shape or an L-shape. In the latter case, the inner flange may be arranged to extend only to a single side of the web. At an outer delimitation of the web, the outer flange may be provided, which may be designed in analogy to the inner flange. The cross-sectional profile may thus comprise a T-shape, an S-shape, a C-shape, or an intermediate shape.

According to the invention, the at least one stiffening frame comprises the first equipment attachment region as defined above. A core aspect lies in the thickened attachment section, which is connectable to the at least one elongate first fastening element. Usually, the web of the circumferential stiffening frame comprises a constant material thickness. Here, a locally thickened section has a material thickness that clearly exceeds this common material thickness. For example, the material thickness of such a web is about 1 to 1,5 mm, for example 1,2 mm. Here, the thickened attachment section may comprise a material thickness of about 2 mm to 3 mm, preferably about 2,5 mm. This local thickening allows to simply reinforce the web locally to bolt the first fastening element to the web. This may be conducted by leading a bolt through the first fastening element and the first attachment section and fixing it with a nut.

Due to the cross-sectional shape of the circumferential stiffening frame, the first fastening element may not be directly laid onto the first attachment section from a radially directly inward position. However, the cutout allows to lead the elongate first fastening element from a radially directly inward position inside the aircraft structure onto the first attachment action.

In an aircraft structure, several or all circumferential stiffening frames may be designed in this manner, such that independent from the desired setup of the cabin, a plurality of attachment sections is already provided. When installing the pieces of equipment, simply the required attachment sections are chosen. Thus, drilling after installation of the stiffening frames is not required. The interior space of the aircraft structure is blocked for a clearly shorter time than with common installation procedures and structural setups. The structural system according to the invention thus allows a faster and more flexible installation of pieces of equipment.

The cutout may comprise an open trapezoidal contour created on the inner flange. The trapezoidal contour may comprise a base edge near the web and side edges that are tapered to an outer edge of the inner flange. Thus, the first fastening element may simply be advanced to the stiffening frame in an axial and radial direction and be brought into the open contour of the cutout. With pieces of equipment that comprise pre-installed first fastening elements there is a sufficient space for advancing the first fastening elements to the first attachment section. Furthermore, bolts, screws and other connecting elements may be handled more comfortably.

The cutout may comprise a closed contour on the inner flange, as an alternative. Here, the cutout may exemplarily have a rectangular contour and may comprise rounded edges. The first fastening element needs to be advanced directly through the rather constricted space of the cutout. While the rigidity of the stiffening frame in this region may be slightly increased compared to the trapezoidal cutout, it may be more complicated to manufacture.

Furthermore, the attachment section may comprise a material thickness that is substantially double the material thickness of neighboring parts of the web without attachment section. As stated above, the material thickness of neighboring parts of the web without attachment section may be in the region of 1 to 1,5 mm. By providing the double amount, a sufficient rigidity is given for introducing loads into the web. Furthermore, a sufficient repairability is given. If rivets are used, there is a sufficient thickness for completely arranging the rivet heads in countersunk holes.

It may be advantageous if the attachment section comprises a reinforcement plate, which is glued/bonded, welded or fastened (riveted, screwed and so on) to the web. In doing so, the common manufacturing processes for manufacturing a circumferential stiffening frame can still be used. By creating an additional reinforcement plate, the attachment section may be simply provided. It may also be conceivable that already existing circumferential stiffening frames may be equipped with such a reinforcement plate as a retrofit. It may be feasible to provide the same material for the reinforcement plate as for the stiffening frame for achieving a thermal compatibility.

The stiffening frame may comprise at least one second equipment attachment region, in which the web and/or the inner flange comprises a first drill hole pattern for receiving at least one second fastening element. As the pieces of equipment may not be held only by first fastening elements, a second set of fastening elements may be used. Together with the first and second fastening element, the piece of equipment may create a framework structure that provides a support in three dimensions. In the second equipment attachment region, instead of the reinforcement plate or another attachment section, the stiffening frame is equipped with a drill hole pattern. This means that the respective stiffening frames of the structure of an aircraft are already equipped with the first drill hole pattern before installation of the aircraft structure. Thus, when an individual aircraft is internally equipped, the at least one second fastening element can be attached to a selected second equipment attachment region without having to plan and conduct a drilling process.

The system may further comprise axial stiffening elements, wherein the at least one stiffening frame comprises radial outer cutouts for letting the axial stiffening elements pass through in a transverse direction to the at least one stiffening frame, and wherein at least one of the axial stiffening elements comprises at least one third equipment attachment region adapted for receiving at least one third fastening element. The axial stiffening elements, which may also be referred to as longitudinal stiffening elements or stringers, extend along the longitudinal axis of an aircraft structure on the inner surface of the aircraft skin. They also provide the possibility to attach a piece of equipment to the aircraft structure. As the axial stiffening elements extend along the longitudinal axis, they may be predestined for a providing a supporting force along a longitudinal axis.

The at least one first fastening element may comprise a first tie rod having a variable length for a tolerance compensation in a radial direction. Tie rods may simply be bolted to the attachment section and hold the piece of equipment in a variable distance. Thus, manufacturing induced tolerances can be compensated to align the respective piece of equipment in a spatially desired manner independent of measurement deviations of the aircraft structure.

The at least one second fastening element may comprise a first bracket adapted to protrude in a radial direction from the web. The first bracket may directly hold the piece of equipment in combination with the at least one first fastening element. It may thus provide support in at least two dimensions. The first bracket may be arranged in a drill hole pattern as stated above, when and where required.

The first bracket may comprise an attachment device with a rotatable and arrestable sleeve having an eccentric borehole for tolerance compensation in a radial direction. By rotating the eccentric sleeve about the eccentric axis, a simple tolerance compensation preferably in a plane perpendicular to the longitudinal axis may be provided.

The axial stiffening elements may comprise a second drill hole pattern in the at least one third equipment attachment region. In analogy to the first drill hole pattern, the second drill hole pattern allows to provide a third fastening element directly when it is required without having to drill in an existing structure.

The at least one third fastening element may comprise a second bracket and a second tie rod having a variable length for tolerance compensation in an axial direction. The second bracket and the second tie rod allows to provide a support in the longitudinal direction and the tie rod is easily adaptable to provide a tolerance compensation.

The invention further relates to an aircraft having a structural system according to the above explanation. At least one piece of equipment is attachable to the at least one circumferential stiffening frame of the structural system through the at least one elongate first fastening element. It is clear that a plurality of pieces of equipment may be provided that is attached with a plurality of first fastening elements. For each piece of equipment, a plurality of first fastening elements can be used.

For example, the at least one piece of equipment may comprise an overhead stowage bin. Preferably, the at least one piece of equipment comprises a plurality of overhead stowage bins that are intended to be arranged in one or a plurality of longitudinal rows inside the structure.

The at least one piece of equipment may be attachable to the structural system through the at least one second fastening element and/or the third fastening element. Preferably, first fastening elements, second fastening elements and third fastening elements are provided, which are able to provide a framework structure together with the piece of equipment that allows to fix the at least one piece of equipment reliably inside the structure.

### BRIEF DESCRIPTION OF THE DRAWINGS

Other characteristics, advantages and potential applications of the present invention result from the following description of the exemplary embodiments illustrated in the figures. In this respect, all described and/or graphically illustrated characteristics also form the object of the invention individually and in arbitrary combination regardless of their composition in the individual claims or their references to other claims. Furthermore, identical or similar objects are identified by the same reference symbols in the figures.
Fig. 1 and 2 show a structural system in two different spatial views.
Fig. 3 shows a structural system in a detail view.
Fig. 4 shows a piece of equipment attached inside an aircraft through the structural system.
Fig. 5a to 5d show the process of installing the piece of equipment.
Fig. 6 shows an aircraft.

### DETAILED DESCRIPTION OF EXEMPLARY EMBODIMENTS

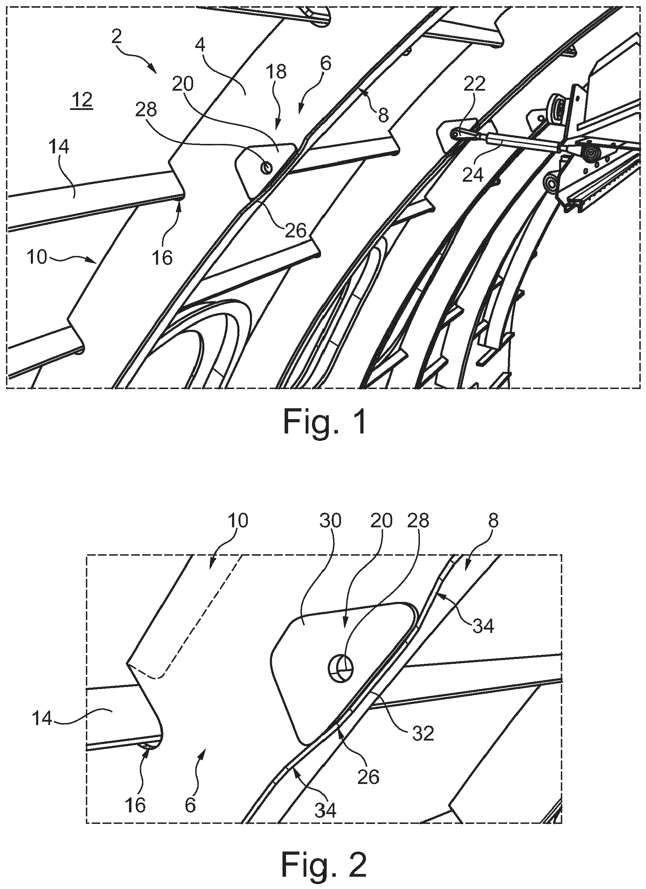

Fig. 1 shows a structural system 2 for an aircraft in a spatial view. Here, a plurality of circumferential stiffening frames 4 are shown. These provide a circumferentially closed contour and are arranged at a distance to each other along a longitudinal axis of the respective aircraft. The stiffening frames 4 comprise a web 6, an inner flange 8 and an outer flange 10. A skin 12 is arranged on the outer flanges 10 of all circumferential stiffening frames 4. Thus, a hollow cylindrical fuselage structure is created. In addition, longitudinal, axial stiffening elements 14 are provided, which cross the stiffening frames 4 and run through radial outer cutouts 16.

The stiffening frame 4 comprises a first equipment attachment region 18, in which the web 6 as a locally thickened attachment section 20 for receiving a first end 22 of a first fastening element 24. Directly adjacent to the attachment section 20, a cutout 26 is provided, which has a trapezoidal, open contour. The attachment section 20 has a locally increased thickness compared to the neighboring parts of the web 4. For example, the local thickness is double the local thickness of the neighboring regions. Thus, the web 6 is locally reinforced and allows to rigidly fasten the first ends 22 of the first attachment elements 24. The cutout 26 allows to let the first attachment element 24 extend in a radial direction away from the skin 12. For receiving the first end 22, the attachment section 20 together with the web 6 comprises a through hole 28, through which a bolt can be placed.

Fig. 2 shows the attachment section 20 in an enlarged view. Here, the attachment section 20 is created by a reinforcement plate 30, which may be glued/bonded, welded or fastened to the web 6. The cutout 26 comprises a base edge 32, which extends along the reinforcement plate 30, leading to beveled side edges 34, which taper in an outward direction.

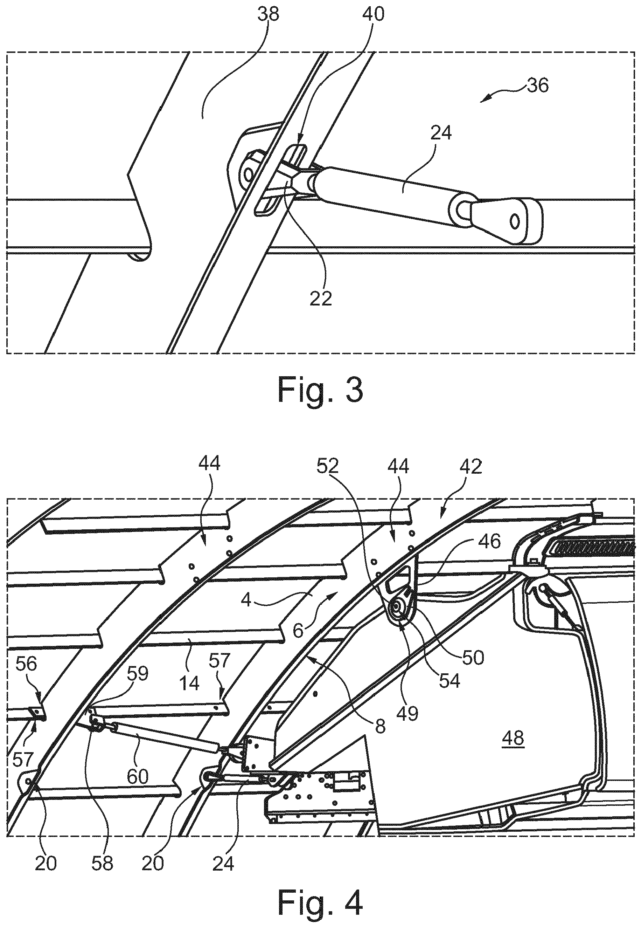

In an alternative structural system 36 shown in Fig. 3, a modified circumferential stiffening frame 38 is provided. Here, the stiffening frame 38 comprises a different cutout 40, which has a closed contour, such that the first end 22 of the first attachment element 24 needs to be fed directly through the cutout 40 in a substantially purely radial direction. The surface area of the radial inner flange 8 is larger in the first equipment attachment region 18 compared to the previous example.

Fig. 4 shows a second attachment region 42, which comprises a set of drill holes 44. These are integrated into the stiffening frames 38 before the installation of the stiffening frames 38. A second fastening element 46 is attached to the second attachment region 42 and is realized in the form of a bracket. It has a roughly triangular shape with a straight base attached to the web 6 and a circularly rounded tip that protrudes away from the frame 4. A piece of equipment 48, which is shown as an overhead stowage compartment, is directly attached to the bracket 46 in its protruding part.

For compensating manufacturing-induced measurement tolerances, the bracket 46 comprises an attachment device 49 having a rotatably supported sleeve 50 with an eccentric borehole 52. A connection element 54 can be inserted into the borehole 52 and will then assume a position given by the rotational position of the sleeve 50. The connection element 54 is introduced into the piece of equipment 48 and connects it to the bracket 46. By rotating the sleeve 50, the radial distance of the connection element 54 to the inner flange 8 is adjustable. The sleeve 50 is arrestable to maintain the adjusted rotational position. It may be useful to use a device exemplarily shown in EP3623646A1.

The piece of equipment 48 is additionally attached to the first attachment section 20 of the stiffening frame 4 through the first attachment element 24. The first attachment element 24 is created in the form of a tie rod, which has a variable, adjustable length. This allows to compensate measurement tolerances to the first attachment section 20.

The axial stiffening elements 14 comprise third equipment attachment regions 56 in which a second drill hole pattern 57 is created. It is adapted for receiving third fastening elements 58, which comprise second brackets 59 and a second tie rod 60. The second brackets 59 are placed in the radial outer cutouts 16. The second tie rod 60 connects the second bracket 59 with the piece of equipment 48. The second tie rod 60 clearly extends clearly in an axial, longitudinal direction. Due to the use of a tie rod, a variable distance to the second bracket 59 can be assumed to provide for a tolerance compensation.

The combination of the three attachment regions allow to support the piece of equipment in three spatial directions. The first attachment region 18 substantially provides a support in a lateral direction. The second attachment region 42 substantially provides a support in a substantially vertical direction. The third attachment region 56 provides a support in a substantially longitudinal direction. The associated connection points on the piece of equipment 48 can be strategically placed to be as close as possible to the respective attachment regions 18, 42 and 48. The piece of equipment 48 may comprise a rigid structure.

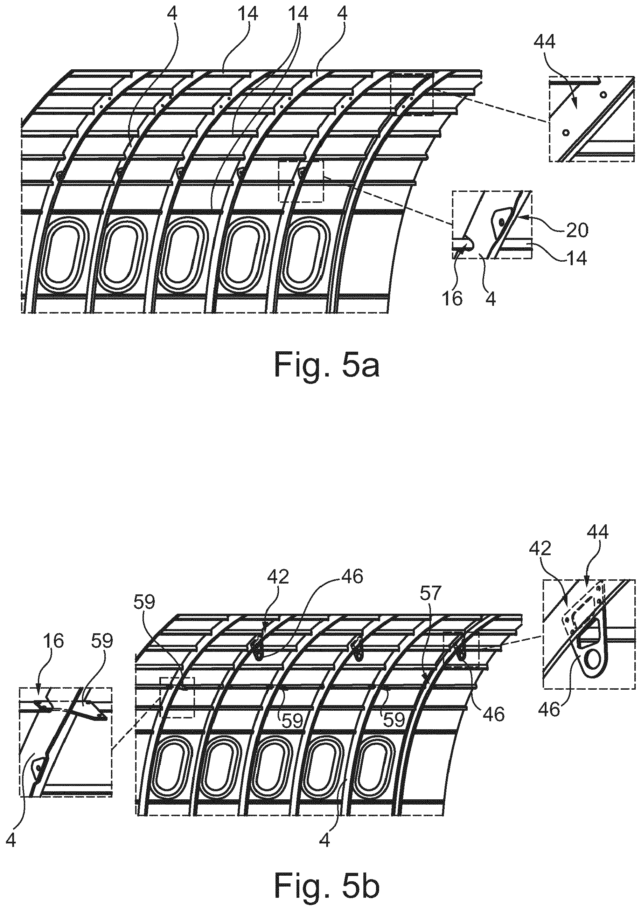

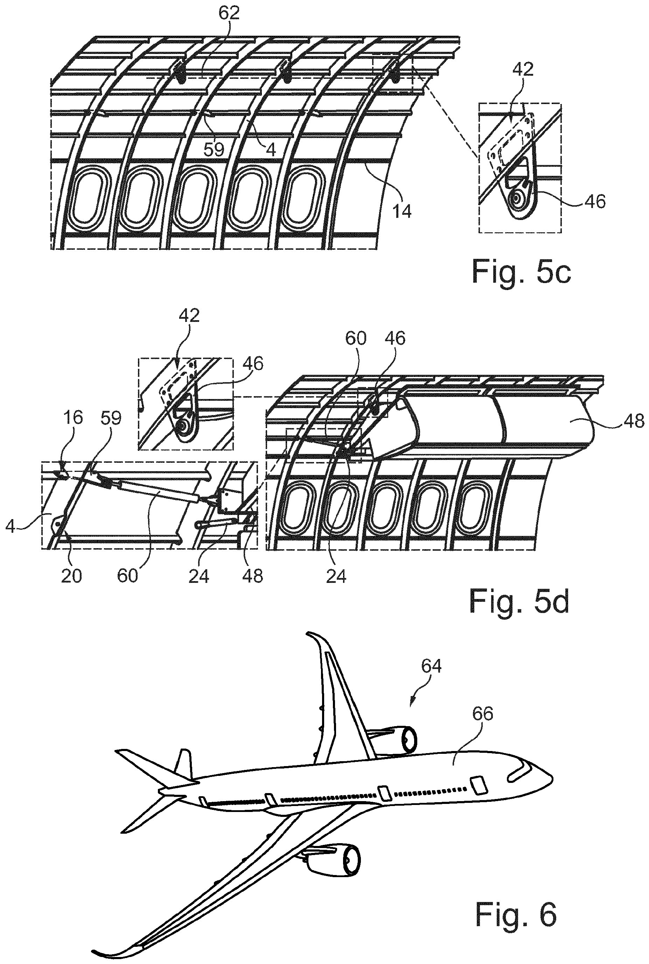

In fig. 5a to 5d the process of attaching the piece of equipment 48 is shown. Fig. 5a shows the stiffening frames 4 and the axial stiffening elements 14, which together with the skin 12 create an aircraft structure. In fig. 5b, first brackets 46 and second brackets 58 are attached as previously shown. In fig. 5c, the eccentric boreholes 52 of the attachment devices 49 are adjusted through the use of a laser beam 62 provided from an external source. The laser beam 62 comprises a defined spatial alignment and is used for aligning all boreholes 52 to this defined spatial alignment, such that the laser beam 62 extends through all first brackets 46 after the alignment. Fig. 5d shows the attachment of the piece of equipment 48 afterwards.

Fig. 6 shows an aircraft 64 having a fuselage 66 created by the structural system 2 or 36 together with the skin 12. Inside, a plurality of pieces of equipment 48 is installed.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments may also be used in combination with other characteristics or steps of other exemplary embodiments described above. Reference characters in the claims are not to be interpreted as limitations.

### REFERENCE NUMERALS

- 2: structural system
- 4: circumferential stiffening frame
- 6: web
- 8: inner flange
- 10: outer flange
- 12: skin
- 14: axial stiffening element
- 16: radial outer cutout
- 18: first equipment attachment region
- 20: attachment section
- 22: first end
- 24: first fastening element
- 26: cutout
- 28: through hole
- 30: reinforcement plate
- 32: base edge
- 34: side edge
- 36: structural system
- 38: circumferential stiffening frame
- 40: cutout
- 42: second attachment region
- 44: drill hole / first drill hole pattern
- 46: first bracket / second fastening element
- 48: piece of equipment
- 49: attachment device
- 50: sleeve
- 52: eccentric borehole
- 54: connection element
- 56: third equipment attachment region
- 57: second drill hole pattern
- 58: third fastening element
- 59: second bracket
- 60: second tie rod
- 62: laser beam
- 64: aircraft
- 66: fuselage

## Claims

1. A structural system (2, 36) for an aircraft (64), comprising
at least one circumferential stiffening frame (4, 38) for stiffening a fuselage (66) of the aircraft (64), the stiffening frame (4, 38) comprising a cross-sectional profile having a web (6) enclosed by a radial inner flange (8) and a radial outer flange (10),
at least one elongate first fastening element (24),
wherein the at least one stiffening frame (4, 38) comprises at least one first equipment attachment region (18), in which the web (6) has a locally thickened attachment section (20) for receiving a first end (22) of the at least one first fastening element (20), and
wherein in the first equipment attachment region (18), the inner flange (8) comprises a cutout (26, 40) directly adjacent to the attachment section (20) for passing through the at least one first fastening element (24) to the attachment section (20).

2. The structural system (2, 36) of claim 1,
wherein the cutout (26, 40) comprises an open trapezoidal contour created on the inner flange (8).

3. The structural system (2, 36) of claim 1 or 2,
wherein the cutout (26, 40) comprises a closed contour on the inner flange (8).

4. The structural system (2, 36) of any of the preceding claims,
wherein the attachment section (20) comprises a material thickness that is substantially double the material thickness of neighboring parts of the web (6) without attachment section.

5. The structural system (2, 36) of any of the preceding claims,
wherein the attachment section (20) comprises a reinforcement plate (30), which is glued/bonded, welded or fastened to the web (6).

6. The structural system (2, 36) of any of the preceding claims,
wherein the stiffening frame (4, 38) comprises at least one second equipment attachment region (42), in which the web (6) and/or the inner flange (8) comprises a first drill hole pattern (44) for receiving at least one second fastening element (46).

7. The structural system (2, 36) of any of the preceding claims,
further comprising axial stiffening elements (14),
wherein the at least one stiffening frame (4, 38) comprises radial outer cutouts (16) for letting the axial stiffening elements (14) pass through in a transverse direction to the at least one stiffening frame (4, 38), and
wherein at least one of the axial stiffening elements (14) comprises at least one third equipment attachment region (56) adapted for receiving at least one third fastening element (58).

8. The structural system (2, 36) of any of the preceding claims,
wherein the at least one first fastening element (24) comprises a first tie rod having a variable length for a tolerance compensation in a radial direction.

9. The structural system (2, 36) of claim 6,
wherein the at least one second fastening element (46) comprises a first bracket (46) adapted to protrude in a radial direction from the web (6).

10. The structural system (2, 36) of claim 9,
wherein the first bracket (46) comprises an attachment device (49) with a rotatable and arrestable sleeve (50) having an eccentric borehole (52) for tolerance compensation in a radial direction.

11. The structural system (2, 36) of claim 7,
wherein the axial stiffening elements (14) comprise a second drill hole pattern (57) in the at least one third equipment attachment region (56).

12. The structural system (2, 36) of claim 7 or 11,
wherein the at least one third fastening element (58) comprises a second bracket (59) and a second tie rod (60) having a variable length for tolerance compensation in an axial direction.

13. Aircraft (64), having a structural system (2, 36) according to any of the preceding claims and at least one piece of equipment (48) attachable to the at least one circumferential stiffening frame (4, 38) of the structural system (2, 36) through the at least one elongate first fastening element (24).

14. Aircraft (64) of claim 13, wherein the at least one piece of equipment (48) comprises an overhead stowage bin (48).

15. Aircraft (64) of claim 14, wherein the at least one piece of equipment (48) is attachable to the structural system (2, 36) through the at least one second fastening element (46) of claim 6 and/or the third fastening element (58) of claim 12.
